# EUROPÄISCHE PATENTSCHRIFT

(11) **EP 0 688 831 B1**
(45) Veröffentlichungstag und Bekanntmachung des Hinweises auf die Patenterteilung: **04.04.2001**
(21) Anmeldenummer: 95106594.5
(22) Anmeldetag: 02.05.1995
(51) Int. Cl.: C09B 62/06, C09B 62/44, C09B 62/505, C09B 62/004

(54) **Wasserlösliche Anthrachinonverbindungen, Verfahren zu ihrer Herstellung und ihre Verwendung als Farbstoffe**
Watersoluble anthraquinone compounds, process for their manufacturing and their use as dyestuffs
Composés du type anthraquinonique solubles dans l'eau, procédé pour leur préparation et leur utilisation comme colorants

(30) Priorität: 17.05.1994 DE 4417192; 14.07.1994 DE 4424819
(43) Veröffentlichungstag der Anmeldung: 27.12.1995
(73) Patentinhaber: DyStar Textilfarben GmbH & Co. Deutschland KG, 60318 Frankfurt am Main (DE)
(72) Erfinder: Reiher, Uwe, Dr., D-65719 Hofheim (DE); Russ, Werner Hubert, Dr., D-65439 Flörsheim (DE)

(56) Entgegenhaltungen:
- FR-A- 1 182 124
- FR-A- 1 326 769
- ARCHIVUM IMMUNOLOGIAE ET THERAPIAE EXPERIMENTALIS, Bd. 32, Nr. 3, 1984 WARSCHAU, Seiten 247-253, D. CHARYTONOWICZ 'Synthesis of 1,4-Diaminoanthraquinone-2-sulfonic acid derivatives coupled to dextran as carriers for interferon'
- CHEMICAL ABSTRACTS, vol. 60, no. 10, 11.Mai 1964 Columbus, Ohio, US; abstract no. 12150a, M. MASAYOSHI 'Anthraquinone dyes' Spalte 12149; & JP-A-62 018 093 (MITSUBISHI CHEMICAL INDUSTRIES CO. LTD.)
- : "Reactive dyes containing two kinds of reactive groups", SCIENCE & INDUSTRY, 1968, , Band 42, Nr. , Seiten 584 - 594

## Beschreibung

Die Erfindung liegt auf dem technischen Gebiet der faserreaktiven Farbstoffe.

Aus der Praxis des Färbens mit faserreaktiven Farbstoffen ergeben sich erhöhte Anforderungen an die Qualität der Färbungen und an die Wirtschaftlichkeit der Färbeprozesse. Infolgedessen bestand weiterhin Bedarf nach neuen faserreaktiven Farbstoffen, die verbesserte Eigenschaften besitzen. Insbesondere für die Herstellung von Färbungen mit blauer Nuance sind faserreaktive Farbstoffe gefragt, die solche Färbungen mit hohen Echtheiten liefern. Von Interesse sind in diesem Zusammenhang beispielsweise blaue bis rotstichig blaue faserreaktive Farbstoffe auf Basis der 1,4-Diamino-9,10-anthrachinon-2-sulfonsäure, wie sie beispielsweise in den deutschen Offenlegungsschriften Nrs. 1 544 354 und 1 934 518 beschrieben werden. In diesen Farbstoffen ist als faserreaktive Gruppierung ein Triazinrest über ein aromatisches Brückenglied mit der in 4-Stellung befindlichen Aminogruppe des Anthrachinons verbunden. Weiterhin werden in dem Artikel "Reactive Dyes Containing Two Kinds of Reactive Groups" auf Seiten 584 - 594 des Bandes 42 der Zeitschrift "Science & Industry" aus dem Jahr 1968 zwei Anthrachinonfarbstoffe, ebenso auch Farbstoffe anderen Chromophors, miteinander auf ihre färberischen Eigenschaften verglichen, wobei diese Farbstoffe einen 2-Chlor-4-(sulfophenylamino)-1 ,3, 5-triazin-6-ylamino-Rest zum einen, zum anderen einen 2-Chlor-4-(β-sulfatoethylsulfonyl-phenylamino)-1,3,5-triazin-6-ylamino-Rest enthalten, der über eine Sulfophenylamino-Gruppe an die 4-Stellung des Anthrachinon-Chromophors gebunden sind.

Mit der vorliegenden Erfindung wurden nunmehr neue Anthrachinonverbindungen gefunden, die der allgemeinen Formel (1) 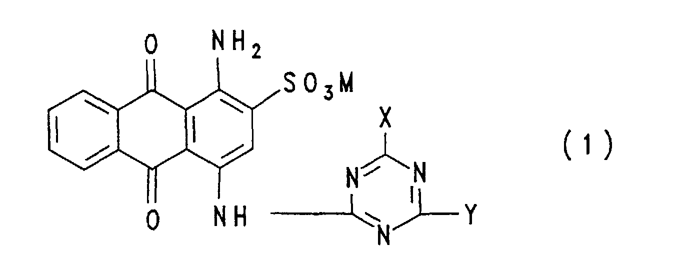 entsprechen, in welcher bedeuten:
- M: ist Wasserstoff oder ein Alkalimetall, wie Natrium, Kalium oder Lithium;
- X: ist Fluor oder eine Gruppe der allgemeinen Formel (2a) oder (2b)

- O - R^{A} (2a)

- NH - R^{B} (2b)

in welchen
R^{A} Alkyl von 1 bis 10 C-Atomen, bevorzugt von 1 bis 4 C-Atomen, wie Methyl und Ethyl, oder Cycloalkyl von 5 bis 8 C-Atomen, wie Cyclohexyl, das noch durch 1 oder 2 Methylgruppen substituiert sein kann, ist oder Alkyl von 2 bis 8 C-Atomen bedeutet, das durch eine oder zwei Heterogruppen unterbrochen ist, die aus der Gruppe -O- , -NH- , -NH-CO- , -CO-NH- , -CO- , -SO₂-, -NH-SO₂- oder - SO₂-NH- ausgewählt sind, oder Benzyl oder Sulfoalkyl von 1 bis 4 C-Atomen, wie Sulfomethyl und β-Sulfoethyl, bevorzugt β-Sulfoethyl, ist, oder Phenyl ist, das durch 1 oder 2 Sulfogruppen und/oder 1 Carboxygruppe substituiert ist, und
R^{B} Wasserstoff, Alkyl von 1 bis 10 C-Atomen, bevorzugt von 1 bis 4 C-Atomen, wie Methyl und Ethyl, oder Cycloalkyl von 5 bis 8 C-Atomen, wie Cyclohexyl, das noch durch 1 oder 2 Methylgruppen substituiert sein kann, ist oder Alkyl von 2 bis 8 C-Atomen bedeutet, das durch eine oder zwei Heterogruppen unterbrochen ist, die aus der Gruppe -O-, -NH- , -NH-CO-, -CO-NH-, -CO-, -SO₂-, -NH-SO₂- oder -SO₂-NH- ausgewählt sind, oder Benzyl, Sulfoalkyl von 1 bis 4 C-Atomen, wie Sulfomethyl und β-Sulfoethyl, oder Cyano ist, bevorzugt Cyano bedeutet;
- Y: ist eine Gruppe der allgemeinen Formel (3)

- NH - R^{o} (3)

in welcher
R^{o} eine Gruppe der allgemeinen Formel (4a), (4b) oder (4c)

- alk - SO₂ - Z (4a) 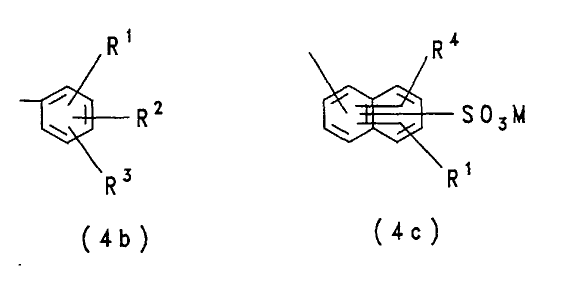
ist, in welchen
- M: die obengenannte Bedeutung besitzt,
- Z: für Vinyl steht oder Ethyl ist, das in β-Stellung durch einen Substituenten substituiert ist, der durch Alkali unter Bildung der Vinylgruppe eliminierbar ist,
- alk: Alkylen von 2 bis 4 C-Atomen ist,
- R¹: eine Gruppe der allgemeinen Formel -SO₂-Z ist, worin Z die obengenannte Bedeutung besitzt,
- R²: Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy, Sulfo oder Nitro ist, bevorzugt Wasserstoff, Alkyl von 1 bis 4 C-Atomen, Alkoxy von 1 bis 4 C-Atomen oder Sulfo ist,
- R³: Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Brom ist, bevorzugt Wasserstoff oder Alkoxy von 1 bis 4 C-Atomen ist, und
- R⁴: Wasserstoff, Sulfo oder Carboxy, bevorzugt Wasserstoff oder Sulfo, ist, oder
- Y: ist eine Gruppe der allgemeinen Formel (5a) oder (5b) 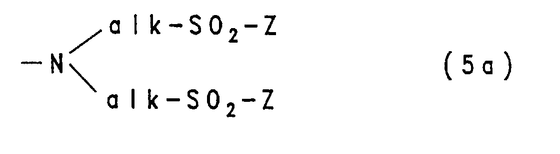 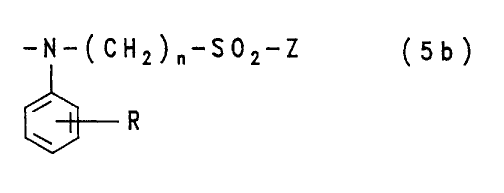 in welchen Z und alk eine der obengenannten Bedeutungen haben,
n für die Zahl 1 bis 4, bevorzugt 2 oder 3, steht und
R Wasserstoff oder Sulfo ist,
oder
- X: ist Chlor und
- Y: ist eine Gruppe der Formel (3), in welcher R° eine Gruppe der Formel (4a) oder (4c) der obigen Definition bedeutet, oder ist eine Gruppe der Formel (5a) oder (5b) der obigen Definition.

In den obengenannten allgemeinen Formeln und ebenso in den nachfolgenden allgemeinen Formeln können die einzelnen Formelglieder, sowohl verschiedener als auch gleicher Bedeutung innerhalb einer allgemeinen Formel, im Rahmen ihrer Bedeutung zueinander gleiche oder voneinander verschiedene Bedeutungen haben.

Die Gruppen "Sulfo", "Carboxy", "Thiosulfato", "Phosphato" und "Sulfato" schließen sowohl der Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Thiosulfatogruppen Gruppen entsprechend der allgemeinen Formel -S-SO₃M , Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt. Alkalisch eliminierbare Substituenten, die in β-Stellung der Ethylgruppe von Z stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Z in Formeln (4b) und (4c) β-Sulfatoethyl oder Vinyl und insbesondere bevorzugt β-Sulfatoethyl, und bevorzugt ist Z in Formeln (4a) und (5b) β-Sulfatoethyl, β-Chlorethyl oder Vinyl, insbesondere bevorzugt β-Chlorethyl und Vinyl.

Reste X sind ausser Fluor und Chlor beispielsweise Methoxy, Ethoxy, Propoxy, Ethoxymethoxy, β-Ethoxyethoxy, β-Aminoethoxy, Benzyloxy, Sulfomethoxy, β-Sulfoethoxy, Methylamino, Ethylamino, Propylamino, Cyclohexylamino, β-(Ethylamino)ethylamino, β-Ethoxyethylamino, Benzylamino, β-Sulfoethylamino, Cyanoamino, sowie 3-Sulfo-phenoxy, 4-Sulfo-phenoxy und 3,5-Disulfo-phenoxy, von diesen bevorzugt 4-Sulfophenoxy. Bevorzugt ist X Fluor, Chlor oder Cyanoamino.

Bevorzugt ist Y eine Gruppe der allgemeinen Formel (3) mit R⁰ gleich einer Gruppe der allgemeinen Formel (4a) oder (4b), in welchen R¹ β-Sulfatoethylsulfonyl oder Vinylsulfonyl ist, R² Wasserstoff, Methyl, Methoxy oder Ethoxy ist, R³ Wasserstoff, Methoxy oder Ethoxy ist und Z Vinyl oder β-Sulfatoethyl bedeutet. Bevorzugt ist Y weiterhin eine Gruppe der allgemeinen Formel (5a) oder (5b), in welchen alk 1,2-Ethylen oder 1,3-Propylen bedeutet, Z Vinyl oder β-Sulfatoethyl ist und n für die Zahl 2 oder 3 steht. In Formel (4c) steht die freie Bindung bevorzugt in β-Stellung an den Naphthalinring gebunden.

Gruppen der allgemeinen Formel (4a), (4b) und (4c) im Rest Y sind beispielsweise
2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(ß-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4-oder -5-(β-sulfatoethylsulfonyl)-phenyl, 2-Chlor-4- oder -5-(β-chlorethylsulfonyl)-phenyl, 3- oder 4-(β-Acetoxyethylsulfonyl)-phenyl, 6-Carboxy-1-sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfonaphth-2-yl, 5-(β-Sulfatoethylsulfonyl)-1-sulfo-naphth-2-yl, 8-(β-Sulfatoethylsulfonyl)-6-sulfo-naphth-2-yl, β-Vinylsulfonyl-ethyl, β- (β'-Chlorethylsulfonyl)-ethyl, β- (β'-Sulfatoethylsulfonyl)-ethyl, γ- (β'-Chlorethylsulfonyl)-propyl, γ-(β'-Sulfatoethylsulfonyl)-propyl )-propyl und γ- (Vinylsulfonyl)-propyl.

Reste der allgemeinen Formeln (5a) und (5b) sind beispielsweise β-(β'-Sulfatoethylsulfonyl)-ethylamino, β-(β'-Chlorethylsulfonyl)-ethylamino, γ-(β'-Sulfatoethylsulfonyl)-propylamino, γ-(β'-Chlorethylsulfonyl)-propylamino, β-(Vinylsulfonyl)-ethylamino, y- (Vinylsulfonyl)-propylamino, N-Phenyl-N-[β-(β'-sulfatoethylsulfonyl)-ethyl] -amino, N-Phenyl-N- [β- (β'-chlorethylsulfonyl)-ethyl]-amino, N -Phenyl-N-[γ-(β'-chlorpropylsulfonyl)-propyl]-amino, N-Phenyl-N-(γ-(β'-sulfatopropylsulfonyl)-propyl]-amino, N-(4'-Sulfo-phenyl)-N-[β- (β'-sulfatoethylsulfonyl)-ethyl]-amino, N-(4'-Sulfo-phenyl)-N-[β-(β'-chlorethylsulfonyl)-ethyl]-amino, N-(4'-Sulfo-phenyl)-N-[γ-(β'-chlorethylsulfonyl)-propyl]-amino, N-(4'-Sulfo-phenyl)-N-[γ-(β'-sulfatoethylsulfonyl)-propyl]-amino. Bis-N,N-[β- (β'-chlorethylsulfonyl)-ethyl]-amino, Bis-N,N-[γ-(β'-chlorethyl-sulfonyl)-propyl]-amino, Bis-(β-vinylsulfonyl-ethyl)-amino, N-(3'-Sulfo-phenyl)-N-[β-(β'-sulfatoethylsulfonyl)-ethyl]-amino, N-(3'-Sulfo-phenyl)-N-[β-(β'-chlorethylsulfonyl)-ethyl]-amino, N-(3'-Sulfo-phenyl)-N-(γ-(β'-chlorethylsulfonyl)-propyl]-amino und N-(3'-Sulfo-phenyl)-N-[γ-(β'-sulfatoethylsulfonyl)-propyl]-amino.

Bevorzugt von den erfindungsgemäßen Anthrachinonverbindungen der allgemeinen Formel (1) sind insbesondere diejenigen, in welcher X für Fluor oder Cyanoamino steht und Y eine Gruppe der allgemeinen Formel (3) mit R^{o} gleich einer Gruppe der allgemeinen Formel (4a) oder einer Gruppe der allgemeinen Formel (4b) jeweils mit R¹ gleich einer Gruppe der Formel -SO₂-Z ist oder eine Gruppe der allgemeinen Formel (5b) bedeutet.

Die vorliegende Erfindung betrifft weiterhin ein Verfahren zur Herstellung der erfindungsgemäßen Anthrachinonverbindungen der allgemeinen Formel (1), das dadurch gekennzeichnet ist, daß man eine Verbindung der allgemeinen Formel (6) 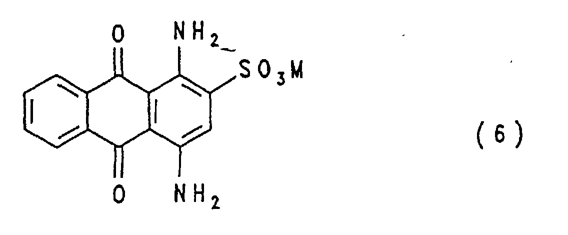 in welcher M die obengenannte Bedeutung besitzt, mit einer Verbindung der allgemeinen Formel (7) 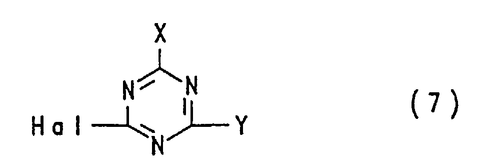 in welcher X und Y eine der obengenannten Bedeutungen haben und Hal für Chlor oder Fluor steht, miteinander umsetzt, oder daß man eine Verbindung der allgemeinen Formel (8) 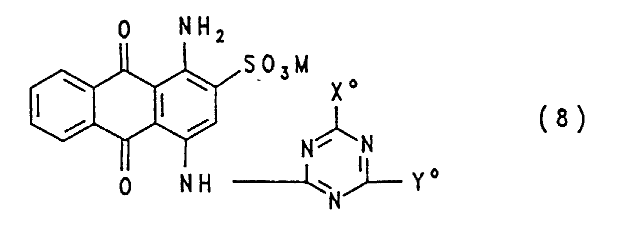 in welcher M die obengenannte Bedeutung besitzt, X⁰ eine der Bedeutungen von X hat und Y⁰ eine der Bedeutungen von Y jedoch mit der Maßgabe besitzt, daß mindestens einer der Reste X⁰ und Y⁰ Fluor oder Chlor bedeutet, im Falle von X⁰ gleich Chlor oder Fluor mit einer Verbindung der allgemeinen Formel HO-R^{A} oder H₂N-R^{B} mit R^{A} und R^{B} der obengenannten Bedeutung und im Falle von Y⁰ gleich Chlor oder Fluor mit einer Verbindung der allgemeinen Formel H₂N-R⁰ mit R⁰ der obengenannten Bedeutung oder mit einer Verbindung der allgemeinen Formel HN(alk-SO₂-Z)₂ mit alk und Z der obengenannten Bedeutung oder mit einer Verbindung der allgemeinen Formel (9) 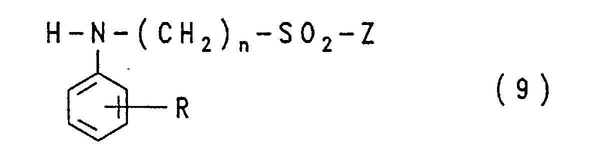 in welcher R, n und Z eine der obengenannten Bedeutungen haben, umsetzt.

Die obengenannten Umsetzungen von amino- bzw. hydroxygruppenhaltigen Ausgangsverbindungen mit einer chlor- oder fluorhaltigen Triazin-Ausgangsverbindung erfolgen im wäßrigen oder wäßrig-organischem Medium in Suspension oder Lösung. Führt man die Umsetzung in einem wäßrigorganischen Medium durch, so ist das organische Medium beispielsweise Aceton, Dimethylformamid, Dimethylsulfoxid oder N-Methyl-pyrrolidon. Vorteilhaft wird der bei der Kondensation freiwerdender Halogenwasserstoff laufend durch Zugabe wäßriger Alkalihydroxide, -carbonate oder -bicarbonate neutralisiert.

Die Kondensationsreaktion eines chlor- oder fluorsubstituierten Triazins der allgemeinen Formel (7) mit dem Anthrachinon der Formel (6) erfolgt in der Regel bei einer Temperatur zwischen -5°C und + 90°C, im Falle von X gleich Fluor oder Chlor und Y gleich einer Gruppe der allgemeinen Formel (3), (5a) oder (5b) bevorzugt bei einer Temperatur zwischen -5°C und + 25°C und bei einem pH-Wert zwischen 6 und 8. Ist in Formel (7) X gleich eine Gruppe der allgemeinen Formel (2a) oder (2b) und Y gleich eine Gruppe der allgemeinen Formel (3), (5a) oder (5b), so führt man die Umsetzung in der Regel bei einem pH-Wert zwischen 1 und 5 und bei einer Temperatur zwischen 50 und 90°C durch.

Die Umsetzung der Ausgangsverbindungen der allgemeinen Formel (8) mit X⁰ und Y⁰ gleich Chlor oder Fluor mit einer Verbindung der allgemeinen Formel H-Y mit Y gleich einer Gruppe der allgemeinen Formel (3), (5a) oder (5b) erfolgt in der Regel bei einer Temperatur zwischen -5°C und + 70°C und bei einem pH-Wert zwischen 3 und 8, im Falle X⁰ und Y⁰ gleich Chlor bevorzugt bei einer Temperatur zwischen 30 und 60°C und einem pH-Wert zwischen 3,5 und 5,5 und im Falle von X⁰ und Y⁰ gleich Fluor bevorzugt bei einer Temperatur zwischen 0 und 30°C und bei einem pH-Wert zwischen 6 und 7,5.

Die Synthese der Ausgangsverbindungen der allgemeinen Formel (8), in welchen X⁰ und Y⁰ beide für Chlor oder für Fluor stehen, erhält man durch Umsetzung einer Anthrachinonverbindung der allgemeinen Formel (6) mit Cyanurchlorid bei einer Temperatur zwischen etwa -5°C und etwa + 30°C, bevorzugt zwischen 0 und 20°C, und bei einem pH-Wert zwischen etwa 4 und etwa 6 bzw. mit Cyanurfluorid bei einer Temperatur zwischen -5°C und + 30°C, bevorzugt zwischen -5°C und + 5°C, und bei einem pH-Wert zwischen 4 und 7. Auch diese Umsetzungen erfolgen in wäßrigem oder wäßrig-organischem Medium.

Die Ausgangsverbindungen entsprechend den obengenannten allgemeinen Formeln und sind allgemein bekannt oder lassen sich gemäß dem Stand der Technik analog bekannten Verfahrensweisen herstellen. Einige der Ausgangsverbindungen entsprechend der allgemeinen Formel (9) sind per se noch nicht beschrieben. Diese Aminoverbindungen lassen sich beispielsweise in der Weise herstellen, daß man N-Allyl-N-acetyl-anilin (s. J. Org. Chem. 14, 1099 (1949)) analog der in der deutschen Offenlegungsschrift Nr. 41 06 106 beschriebenen Verfahrensweise mit 2-Mercapto-ethanol in Gegenwart eines Radikalinitiators umsetzt, die erhaltene N-[γ-(β'-Hydroxyethylthio)-propyl]-N-acetyl-anilin-Verbindung zur Sulfonylverbindung oxidiert, beispielsweise mittels Wasserstoffperoxid in Gegenwart einer katalytischen Menge einer Übergangsmetallverbindung, wie beispielsweise Wolframoxid. Aus der so erhaltenen Sulfonylverbindung wird die Acetylgruppe im alkalischen oder sauren Bereich, vorzugsweise in salzsaurer wäßriger Lösung, wie beispielsweise in 5 bis 30 %iger wäßriger Salzsäure, bei einer Temperatur zwischen 80 und 100°C hydrolytisch abgespalten. Das so erhaltene N-Phenyl-N-[γ-(β'-hydroxyethylsulfonyl)-propyl]-amin kann aus der neutral gestellten wäßrigen Syntheselösung von der wäßrigen Phase abgetrennt werden. Dessen β-Hydroxyethylsulfonyl-Gruppe läßt sich nach üblichen Methoden verestern, so beispielsweise mittels konzentrierter Schwefelsäure bei einer Temperatur zwischen 10 und 30°C in die β-Sulfatoethylsulfonyl-Verbindung überführen.

Die Abscheidung der erfindungsgemäß hergestellten Verbindungen der allgemeinen Formel (1) - im nachfolgenden Verbindungen (1) genannt - aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Verbindungen (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, verwendet werden. Auch können sie in Form der bei der Synthese anfallenden Lösungen, gegebenenfalls nach Zusatz einer Puffersubstanz und gegebenenfalls nach Konzentrierung, direkt als Flüssigpräparation der färberischen Verwendung zugeführt werden.

Gegenstand der vorliegenden Erfindung ist deshalb auch die Verwendung der Verbindungen (1) zum Färben von hydroxy- und/oder carbonamidgruppenhaltigen Materialien bzw. Verfahren zum Färben solcher Materialien, bei welchem man die Verbindung (1) auf das Material aufbringt oder in das Material einbringt und sie auf oder in dem Material mittels Wärme oder mit Hilfe eines alkalisch wirkenden Mittels oder Mittels beider Maßnahmen fixiert. Eingeschlossen sind hierbei die Massefärbung, beispielsweise Folien aus Polyamid, und die Druckfärbung. Bevorzugt kommen die Materialien in Form von Fasermaterialien zur Anwendung, insbesondere in Form von Textilfasern, wie in Form von Geweben und Garnen, beispielsweise in Form von Strängen und Wickelkörpern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Verbindungen (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Verbindungen (1) beschleunigenden Neutralsalze können dem Bade gewünschtenfalls auch erst nach Erreichen der eigentlichen Färbetemperatur zugesetzt werden.

Nach dem Klotzverfahren werden ebenfalls, insbesondere auf Cellulosefasern, Färbungen mit ausgezeichneter Farbausbeute bei hohem Fixiergrad und mit sehr gutem Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und die Verbindung (1) enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektkrolythaltiges alkalisches Bad oder durch Überklotzen mit einer alkalischen elektkrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den Verbindungen (1) erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindungen (1) auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der Verbindungen (1) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der Verbindungen (1) ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammonmiumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Verbindungen (1) hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, eine gute Lichtechtheit und gute Naßechtheiten, wie Wasch-, Walk-, Wasser-, Seewasser-, Überfärbe- und Schweißechtheiten, des weiteren eine gute Plissierechtheit, Bügelechtheit und Reibechtheit.

Besonders hervorzuheben sind die mit den erfindungsgemäßen Farbstoffen auf Cellulosefasermaterialien erzielbaren hohen Fixierausbeuten, die bei der Anwendung nach Druckverfahren und Klotzfärbeverfahren über 90 % betragen können. Ein weiterer Vorteil der Verbindungen (1) besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

4,3 Teile Cyanamid werden unter gutem Rühren zu einer Suspension aus 18,4 Teilen Cyanurchlorid in 200 Teilen Wasser und 200 Teilen Eis gegeben. Mittels konzentrierter wäßriger Natronlauge wird ein pH-Wert von 9 eingestellt und die Umsetzung unter Einhaltung dieses pH-Wertes bei einer Temperatur zwischen 0 und 3°C während etwa zwei Stunden zu Ende geführt. Man gibt nun verdünnte wäßrige Salzsäure bis zu einem pH-Wert von 5 und anschließend 29,5 Teile 4-(β-Sulfatoethylsulfonyl)-anilin hinzu und führt die Umsetzung bei einer Temperatur von etwa 5 bis 8°C während etwa vier Stunden weiter, wobei der pH-Wert auf 1 bis 1,5 abfällt. Danach wird mit Natriumcarbonat ein pH-Wert von 5,5 eingestellt und die erhaltene Syntheselösung zu einer Lösung aus 31,8 Teilen 1,4-Diamino-9,10-anthrachinon-2-sulfonsäure in 600 Teilen Wasser gegeben. Man führt die Umsetzung bei einem pH-Wert von 3,5 und einer Temperatur von 75°C während etwa zwei Stunden durch, kühlt sodann den Ansatz auf Raumtemperatur und isoliert die erfindungsgemäße Anthrachinonverbindung in üblicher Weise, beispielsweise durch Aussalzen mit Kaliumchlorid, als Alkalimetallsalz (Natrium- und Kaliumsalz).

Die erfindungsgemäße Anthrachinonverbindung besitzt, in Form der freien Säure geschrieben, die Formel

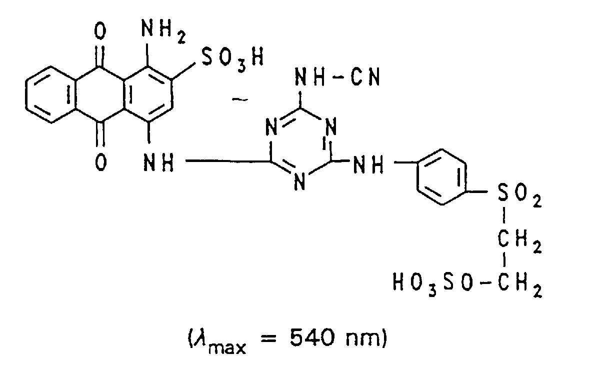

Sie hat sehr gute faserreaktive Farbstoffeigenschaften und färbt die in der Beschreibung genannten Fasermaterialien, wie insbesondere Cellulosefasermaterialien, nach den in der Technik für faserreaktive Farbstoffe üblichen Anwendungsverfahren in farbstarken rotstichig blauen Tönen mit guten Echtheitseigenschaften, von denen insbesondere die gute Lichtechtheit hervorgehoben werden.

### Beispiel 2

Man trägt 31,8 Teile 1,4-Diamino-9,10-anthrachinon-2-sulfonsäure unter gutem Rühren in eine Suspension aus 18 Teilen Cyanurchlorid in 200 Teilen Wasser und 200 Teilen Eis ein, stellt mit wäßriger Natronlauge einen pH-Wert von 4,5 ein und führt die Umsetzung während etwa zwei Stunden bei 0 bis 3°C unter Einhaltung dieses pH-Wertes durch. Man erwärmt sodann den Ansatz innerhalb von 30 Minuten auf 20°C, gibt 29,5 Teile 4-(β-Sulfatoethylsulfonyl)-anilin hinzu und führt die zweite Kondensationsreaktion bei einem pH-Wert von 5,5 während etwa vier Stunden bei 45 bis 50°C durch. Danach kühlt man den Ansatz ab und isoliert die erfindungsgemäße Anthrachinonverbindung, die, in Form der freien Säure geschrieben, der Formel 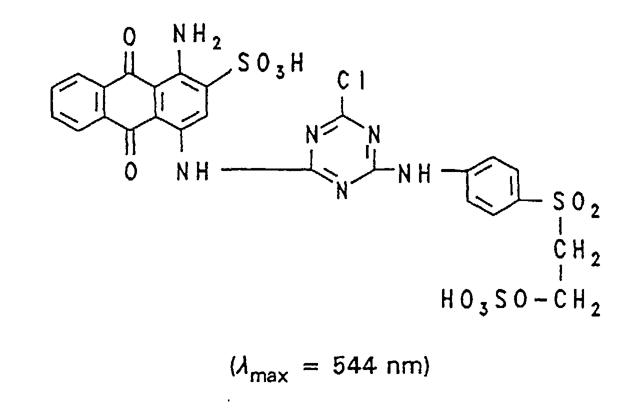 entspricht, in üblicher Weise, beispielsweise durch Aussalzen mit Kaliumchlorid als Alkalimetallsalz (Natrium- und Kaliumsalz). Die erfindungsgemäße Anthrachinonverbindung besitzt sehr gute faserreaktive Eigenschaften und liefert als Farbstoff nach den in der Technik für faserreaktive Farbstoffe üblichen Färbe- und Druckverfahren farbstarke, rotstichig blaue Färbungen und Drucke auf den in der Beschreibung genannten Materialien, wie beispielsweise Cellulosefasermaterialien, wie Baumwolle. Die Färbungen zeichnen sich durch gute Echtheitseigenschaften, von denen insbesondere die Lichtechtheit hervorgehoben werden kann, aus.

### Beispiel 3

Man verfährt zur Herstellung einer erfindungsgemäßen Anthrachinonverbindung gemäß der Verfahrensweise des Beispieles 2, setzt jedoch anstelle von 4-(β-Sulfatoethylsulfonyl)-anilin als Ausgangsverbindung die äquivalente Menge an 3-(β-Sulfatoethylsulfonyl)-anilin ein. Die erfindungsgemäße Anthrachinonverbindung zeigt in wäßriger Lösung ein Absorptionsmaximum bei 546 nm und besitzt die gleichen guten Farbstoffeigenschaften wie die erfindungsgemäße Anthrachinonverbindung des Beispieles 2. Man erhält ebenfalls, beispielsweise auf Baumwolle, farbstarke, rotstichig blaue Färbungen und Drucke mit guten Echtheitseigenschaften, insbesondere einer guten Lichtechtheit.

### Beispiel 4

Man rührt 18,3 Teile Cyanurfluorid in eine Lösung von 0°C und einem pH-Wert von 6,8 von 31,1 Teilen 1,4-Diamino-9,10-anthrachinon-2-sulfonsäure und 14,2 Teilen Dinatriumhydrogenphosphat in 600 Teilen Wasser ein, rührt den Ansatz noch etwa zehn Minuten bei einem pH-Wert von 6,8 nach, gibt sodann 28,1 Teile 4-(β-Sulfatoethylsulfonyl)-anilin hinzu, rührt den Ansatz noch etwa zwei Stunden bei 20 bis 25°C unter Einhaltung eines pH-Wertes von 6,5 bis 7,0 und isoliert sodann die erfindungsgemäße Anthrachinonverbindung durch Aussalzen mit Kaliumchlorid. Sie besitzt, in Form der freien Säure geschrieben, die Formel 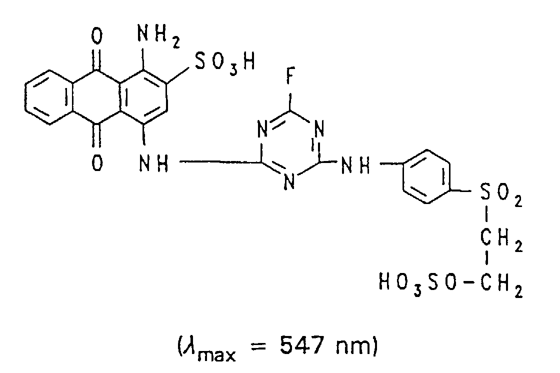 und färbt beispielsweise Baumwolle nach den in der Technik für faserreaktive Farbstoffe üblichen Anwendungsverfahren in farbstarken, rotstichig blauen Tönen mit guten Echtheiten, von denen insbesondere die gute Lichtechtheit hervorgehoben werden kann.

### Beispiel 5

Man trägt in eine Suspension von 10,3 Teilen Natriumhydrogencarbonat in 100 Vol.-Teilen Methanol 22,8 Teile Cyanurchlorid ein und führt die Umsetzung unterhalb 20°C durch, gibt anschließend 50 Teile Wasser hinzu, saugt den gebildeten Niederschlag ab, trägt ihn in eine Lösung von 31,8 Teilen 1,4-Diamino-9,10-anthrachinon-2-sulfonsäure in 600 Teilen Wasser ein und führt die Umsetzung während etwa 12 Stunden bei 20°C und einem pH-Wert von 6 durch. Man stellt danach den Ansatz mit verdünnter Salzsäure auf einen pH-Wert von 4,5, gibt 29,5 Teile 3-(β-Sulfatoethylsulfonyl)-anilin hinzu und rührt den Ansatz noch etwa zwei Stunden bei 85 bis 90°C weiter. Man isoliert die erfindungsgemäße Anthrachinonverbindung bei Raumtemperatur durch Aussalzen mit Kaliumchlorid. Sie besitzt, in Form der freien Säure geschrieben, die Formel 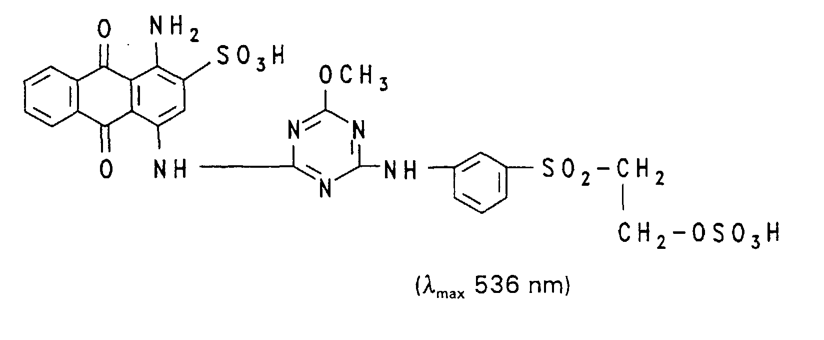 zeigt sehr gute Farbstoffeigenschaften und färbt die in der Beschreibung genannten Fasermaterialien, wie insbesondere Cellulosefasermaterialien, nach den in der Technik für faserreaktive Farbstoffe üblichen Anwendungsverfahren in farbstarken rotstichig blauen Tönen mit guten Echtheitseigenschaften, von denen insbesondere die gute Lichtechtheit hervorgehoben werden.

### Beispiele 6 bis 53

In den nachfolgenden Tabellenbeispielen sind weitere erfindungsgemäße Anthrachinonverbindungen entsprechend der allgemeinen Formel (1) anhand ihrer Komponenten beschrieben. Sie lassen sich in erfindungsgemäßer Weise, wie beispielsweise analog einem der obigen Beispiele, aus den aus der allgemeinen Formel (1) und dem entsprechenden Tabellenbeispiel ersichtlichen Ausgangsverbindungen (der 1,4-Diamino-9,10-anthrachinon-2-sulfonsäure, Cyanurchlorid oder Cyanurfluorid und einer Verbindung entsprechend der allgemeinen Formel H-X und der allgemeinen Formel H-Y) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel angegebenen Farbton (hier für Baumwolle) in hoher Farbstärke und guten Echtheiten.

| | Anthrachinonverbindung der Formel (1) | | |
|---|---|---|---|
| Bsp. | Rest X | Rest Y | Farbton |
| 6 | 3,5-Disulfophenoxy | γ-(β'-Sulfatoethylsulfonyl)-propylamino | rotstichig blau |
| 7 | 3,5-Disulfophenoxy | β-(β'-Sulfatoethylsulfonyl)-ethylamino | rotstichig blau |
| 8 | 3,5-Disulfophenoxy | 4-(β-Sulfatoethylsulfonyl)-phenylamino | rotstichig blau (540) |
| 9 | Cyanoamino | 3-(β-Sulfatoethylsulfonyl)-phenylamino | rotstichig blau (542) |
| 10 | Cyanoamino | 2-Methoxy-5-(β-sulfatoethylsulfonyl)-phenylamino | rotstichig blau |
| 11 | Cyanoamino | 4-(Vinylsulfonyl)-phenylamino | rotstichig blau (539) |
| 12 | 3-Sulfo-phenoxy | γ-(β'-Sulfatoethylsulfonyl)-propylamino | rotstichig blau |
| 13 | 3-Sulfo-phenoxy | β-(β'-Sulfatoethylsulfonyl)-ethylamino | rotstichig blau |
| 14 | Chlor | γ-(β'-Chlorethylsulfonyl)-propylamino | rotstichig blau |
| 15 | Chlor | γ-(Vinylsulfonyl)-propylamino | rotstichig blau |
| 16 | Chlor | N-Phenyl-N-[β-(β'-sulfatoethylsulfonyl)-ethyl]-amino | rotstichig blau (545) |
| 17 | Chlor | N-(4-Sulfo-phenyl)-N-[β-(β'-sulfatoethylsulfonyl)-ethyl]-amino | rotstichig blau |
| 18 | Chlor | N-Phenyl-N-[γ-(β'-sulfatoethylsulfonyl)-propyl]-amino | rotstichig blau |
| 19 | Chlor | N-(3-Sulfo-phenyl)-N-[γ-(β'-sulfatoethylsulfonyl)-propyl]-amino | rotstichig blau |
| 20 | Chlor | N-(4-Sulfo-phenyl)-N-[γ-(β'-sulfatoethylsulfonyl)-propyl]-amino | rotstichig blau (542) |
| 21 | Chlor | Bis-(β-vinylsulfonyl-ethyl)-amino | rotstichig blau (546) |
| 22 | Chlor | Bis-[β-(β'-chlorethylsulfonyl)-ethyl]-amino | rotstichig blau |
| 23 | Chlor | γ-(β'-Sulfatoethylsulfonyl)-propylamino | rotstichig blau |
| 24 | Chlor | β-(β'-Chlorethylsulfonyl)-ethylamino | rotstichig blau (542) |
| 25 | Chlor | β-(β'-Sulfatoethylsulfonyl)-ethylamino | rotstichig blau |
| 26 | Fluor | 3-(β-Sulfatoethylsulfonyl)-phenylamino | rotstichig blau (541) |
| 27 | Fluor | 2-Methoxy-5-(β-sulfatoethylsulfonyl)-phenylamino | rotstichig blau |
| 28 | Fluor | 4-(Vinylsulfonyl)-phenylamino | rotstichig blau (544) |
| 29 | Fluor | γ-(β'-Chlorethylsulfonyl)-propylamino | rotstichig biau |
| 30 | Fluor | γ-(β'-Sulfatoethylsulfonyl)-propylamino | rotstichig blau |
| 31 | Fluor | γ-(Vinylsulfonyl)-propylamino | rotstichig blau (543) |
| 32 | Fluor | β-(β'-Chlorethylsulfonyl)-ethylamino | rotstichig blau |
| 33 | Fluor | -(β'-Sulfatoethylsulfonyl)-ethylamino | rotstichig blau |
| 34 | Fluor | N-Phenyl-N-[β-(β'-sulfatoethylsulfonyl)-ethyl]-amino | rotstichig blau (548) |
| 35 | Fluor | N-(4-Sulfo-phenyl)-N-[β-(β'-sulfatoethylsulfonyl)-ethyl]-amino | rotstichig blau (549) |
| 36 | Fluor | N-Phenyl-N-(γ-(β'-sulfatoethylsulfonyl)-propyl]-amino | rotstichig blau |
| 37 | Fluor | N-(3-Sulfo-phenyl)-N-[γ-(β'-sulfatoethylsulfonyl)-propyl]-amino | rotstichig blau |
| 38 | Fluor | N-(4-Sulfo-phenyl)-N-[γ-(β'-sulfatoethylsulfonyl)-propyl]-amino | rotstichig blau |
| 39 | Fluor | Bis-(β-vinylsulfonylethyl)-amino | rotstichig blau (545) |
| 40 | Fluor | Bis-[β-(β'-chlorethylsulfonyl)-ethyl]-amino | rotstichig blau |
| 41 | Fluor | Bis-[γ-(β'-chlorethylsulfonyl)-propyl]-amino | rotstichig blau |
| 42 | Methoxy | 4-(β-Sulfatoethylsulfonyl)-phenylamino | rotstichig blau (538) |
| 43 | Methoxy | 2-Methoxy-5-(β-sulfatoethylsulfonyl)phenylamino | rotstichig blau |
| 44 | Methoxy | 4-(Vinylsulfonyl)-phenylamino | rotstichig blau (539) |
| 45 | Methoxy | γ-(β'-Sulfatoethylsulfonyl)-propylamino | rotstichig blau |
| 46 | Methoxy | γ-(β'-Chlorethylsulfonyl)-propylamino | rotstichig blau (544) |
| 47 | Methoxy | β-(β'-Sulfatoethylsulfonyl)-ethylamino | rotstichig blau |
| 48 | Methoxy | β-(β'-Chlorethylsulfonyl)-ethylamino | rotstichig blau (546) |
| 49 | 4-Sulfo-phenoxy | 4-(β-Sulfatoethylsulfonyl)-phenylamino | rotstichig blau (541) |
| 50 | 4-Sulfo-phenoxy | 3-(β-Sulfatoethylsulfonyl)-phenylamino | rotstichig blau |
| 51 | 4-Sulfo-phenoxy | γ-(β'-Sulfatoethylsulfonyl)-propylamino | rotstichig blau |
| 52 | 4-Sulfo-phenoxy | β-(β'-Sulfatoethylsulfonyl)-ethylamino | rotstichig blau |
| 53 | 3-Sulfo-phenoxy | 4-(β-Sulfatoethylsulfonyl)-phenylamino | rotstichig blau (542) |

## Patentansprüche

1. Anthrachinonverbindung entsprechend der allgemeinen Formel (1) 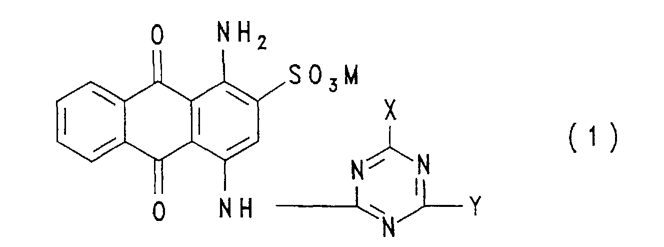 in welcher bedeuten:
M ist Wasserstoff oder ein Alkalimetall,
X ist Fluor oder eine Gruppe der allgemeinen Formel (2a) oder (2b)
- O - R^{A} (2a)
- NH - R^{B} (2b)
in welchen
R^{A} Alkyl von 1 bis 10 C-Atomen, Cycloalkyl von 5 bis 8 C-Atomen, das noch durch 1 oder 2 Methylgruppen substituiert sein kann, oder Alkyl von 2 bis 8 C-Atomen bedeutet, das durch eine oder zwei Heterogruppen unterbrochen ist, die aus der Gruppe -O-, -NH-, -NH-CO-, -CO-NH-, -CO-, - SO₂- , -NH-SO₂- oder -SO₂-NH- ausgewählt sind, oder Benzyl oder Sulfoalkyl von 1 bis 4 C-Atomen oder Phenyl ist, das durch 1 oder 2 Sulfogruppen und/oder 1 Carboxygruppe substituiert ist, und
R^{B} Wasserstoff, Alkyl von 1 bis 10 C-Atomen, Cycloalkyl von 5 bis 8 C-Atomen, das noch durch 1 oder 2 Methylgruppen substituiert sein kann, oder Alkyl von 2 bis 8 C-Atomen bedeutet, das durch eine oder zwei Heterogruppen unterbrochen ist, die aus der Gruppe -O- , -NH- , -NH-CO- , - CO-NH- , -CO- , -SO₂-, -NH-SO₂- oder -SO₂-NH-ausgewählt sind, oder Benzyl, Sulfoalkyl von 1 bis 4 C-Atomen oder Cyano bedeutet;
Y ist eine Gruppe der allgemeinen Formel (3)
- NH - R^{o} (3)
in welcher
R^{o} eine Gruppe der allgemeinen Formel (4a), (4b) oder (4c)
- alk - SO₂ - Z (4a) 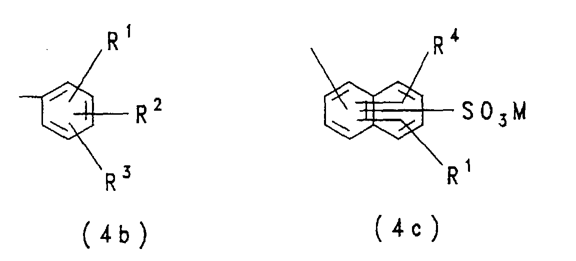
ist, in welchen
M die obengenannte Bedeutung besitzt,
Z für Vinyl steht oder Ethyl ist, das in ß-Stellung durch einen Substituenten substituiert ist, der durch Alkali unter Bildung der Vinylgruppe eliminierbar ist,
alk Alkylen von 2 bis 4 C-Atomen ist,
R¹ eine Gruppe der allgemeinen Formel -SO₂-Z ist, worin Z die obengenannte Bedeutung besitzt,
R² Wasserstoff, Alkyl von 1 bis 4 C-Atomen, Alkoxy von 1 bis 4 C-Atomen, Chlor, Brom, Sulfo oder Nitro ist,
R³ Wasserstoff, Alkyl von 1 bis 4 C-Atomen, Alkoxy vonl bis 4 C-Atomen, Chlor oder Brom ist und
R⁴ Wasserstoff, Sulfo oder Carboxy ist, oder
Y ist eine Gruppe der allgemeinen Formel (5a) oder (5b) 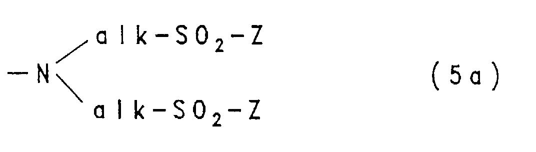 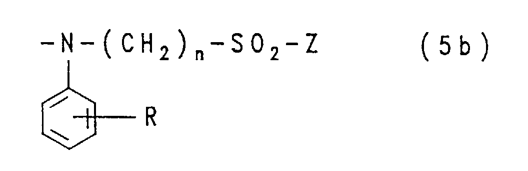 in welchen Z und alk eine der obengenannten Bedeutungen haben,
n für die Zahl 1 bis 4, steht und
R Wasserstoff oder Sulfo ist,
oder
x ist Chlor und
Y ist eine Gruppe der Formel (3), in welcher R° eine Gruppe der Formel (4a) oder (4c) der obigen Definition bedeutet, oder ist eine Gruppe der Formel (5a) oder (5b) der obigen Definition.

2. Anthrachinonverbindung nach Anspruch 1, dadurch gekennzeichnet, daß X Flour ist.

3. Anthrachinonverbindung nach Anspruch 1, dadurch gekennzeichnet, daß X Cyanoamino ist.

4. Verbindung nach Anspruch 1 oder 2, dadurch gekennzeichnet, daß Y ein Rest der allgemeinen Formel 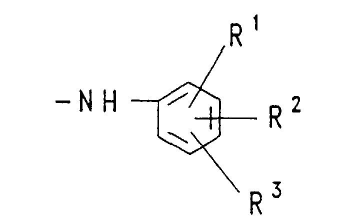 ist, in welcher R¹, R² und R³ die in Anspruch 1 genannten Bedeutungen haben.

5. Verbindung nach mindestens einem der Ansprüche 1 bis 4, dadurch gekennzeichnet, daß R¹ die in Anspruch 1 genannte Bedeutung hat, R² Wasserstoff, Alkyl von 1 bis 4 C-Atomen, Alkoxy von 1 bis 4 C-Atomen oder Sulfo ist und R³ Wasserstoff oder Alkoxy von 1 bis 4 C-Atomen ist.

6. Verbindung nach mindestens einem der Ansprüche 1 bis 5, dadurch gekennzeichnet, daß R² Wasserstoff und R³ Wasserstoff oder Methoxy ist.

7. Anthrachinonverbindung nach mindestens einem der Ansprüche 1 bis 6, dadurch gekennzeichnet, daß Z Vinyl, ß-Sulfatoethyl oder ß-Chlorethyl ist.

8. Anthrachinonverbindung nach Anspruch 1 der Formel 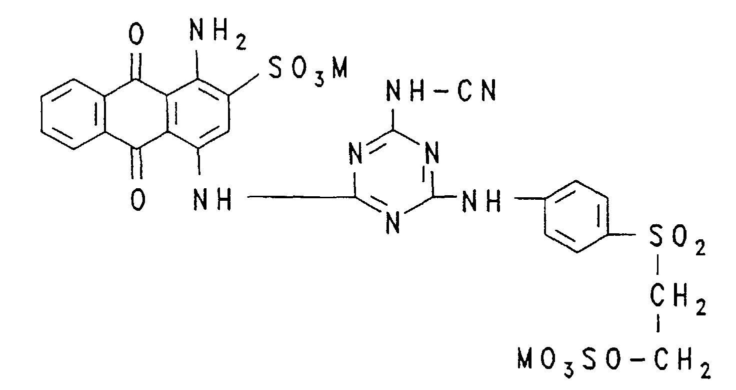 in welcher M Wasserstoff oder ein Alkalimetall ist.

9. Verfahren zur Herstellung einer Anthrachinonverbindung entsprechend der allgemeinen Formel (1) von Anspruch 1, dadurch gekennzeichnet, daß man eine Verbindung der allgemeinen Formel (6) 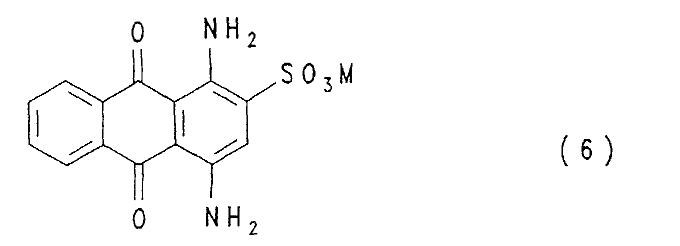 in welcher M die in Anspruch 1 genannte Bedeutung besitzt, mit einer Verbindung der allgemeinen Formel (7) 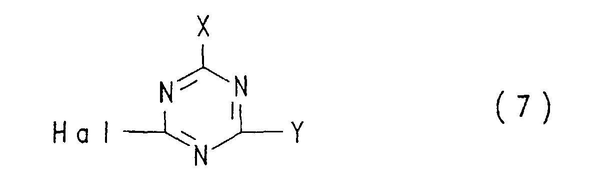 in welcher X und Y eine der in Anspruch 1 genannten Bedeutungen haben und Hal für Chlor oder Fluor steht, miteinander umsetzt, oder daß man eine Verbindung der allgemeinen Formel (8) 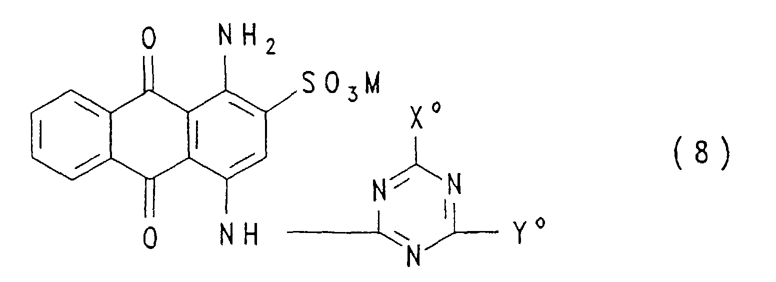 in welcher M die in Anspruch 1 genannte Bedeutung besitzt, X° eine der Bedeutungen von X hat und Y° Fluor oder Chlor bedeutet, im Falle von X° gleich Chlor oder Fluor mit einer Verbindung der allgemeinen Formel HO-R^{A} oder H₂N-R^{B} mit R^{A} und R^{B} der in Anspruch 1 genannten Bedeutung und Y° gleich Chlor oder Fluor mit einer Verbindung der allgemeinen Formel H₂N-R° mit R° der obengenannten Bedeutung oder mit einer Verbindung der allgemeinen Formel HN(alk-SO₂-Z)₂ mit alk und Z der obengenannten Bedeutung oder mit einer Verbindung der allgemeinen Formel (9) 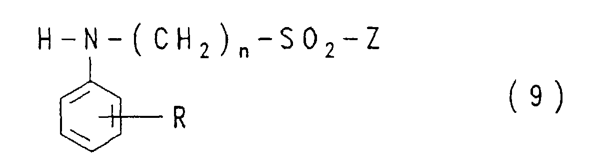 in welcher R, n und Z eine der in Anspruch 1 genannten Bedeutungen haben, umsetzt.

10. Verwendung einer Anthrachinonverbindung von Anspruch 1 zum Färben (einschließlich Bedrucken) von hydroxy- und/oder carbonamidgruppenhaltigem Material, insbesondere Fasermaterial.

11. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff eine Anthrachinonverbindung von Anspruch 1 einsetzt.

## Claims

1. An anthraquinone compound of the formula (1) 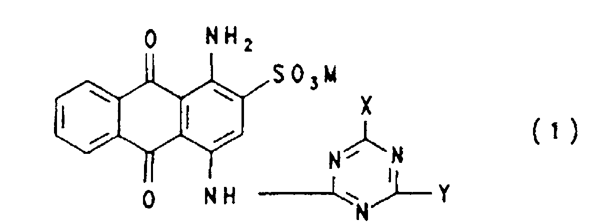 in which:
M is hydrogen or an alkali metal,
x is fluorine or a group of the formula (2a) or (2b)
- O - R^{A} (2a)
- NH - R^{B} (2b)
in which
R^{A} is alkyl of 1 to 10 carbon atoms, cycloalkyl of 5 to 8 carbon atoms which may be further substituted by 1 or 2 methyl groups, or is alkyl of 2 to 8 carbon atoms which is interrupted by one or two hetero-groups selected from the group consisting of -O-, -NH-, -NH-CO-, -CO-NH-, -CO-, -SO₂-, -NH-SO₂-and -SO₂-NH-, or is benzyl or sulfoalkyl of 1 to 4 carbon atoms, or is phenyl which is substituted by 1 or 2 sulfo groups and/or 1 carboxyl group, and
R^{B} is hydrogen, alkyl of 1 to 10 carbon atoms, cycloalkyl of 5 to 8 carbon atoms which may be further substituted by 1 or 2 methyl groups, or is alkyl of 2 to 8 carbon atoms which is interrupted by one or two heterogroups selected from the group consisting of -O-, -NH-, -NH-CO-, -CO-NH-, -CO-, -SO₂-, -NH-SO₂- and -SO₂-NH-, or is benzyl, sulfoalkyl of 1 to 4 carbon atoms or cyano;
Y is a group of the formula (3)
- NH - R^{o} (3)
in which
R^{o} is a group of the formula (4a), (4b) or (4c)
- alk - SO₂ - Z (4a) 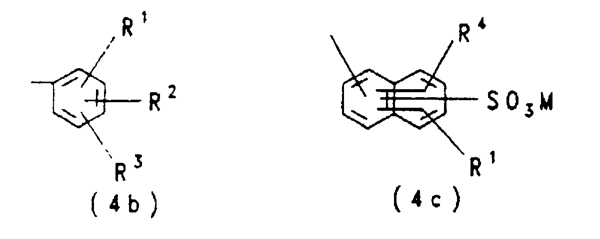
in which
M is as defined above,
Z is vinyl or is ethyl which is substituted in the β-position by a substituent which can be eliminated by alkali to form the vinyl group,
alk is alkylene of 2 to 4 carbon atoms,
R¹ is a group of the formula -SO₂-Z in which Z is as defined above,
R² is hydrogen, alkyl of 1 to 4 carbon atoms, alkoxy of 1 to 4 carbon atoms, chlorine, bromine, sulfo or nitro,
R³ is hydrogen, alkyl of 1 to 4 carbon atoms, alkoxy of 1 to 4 carbon atoms, chlorine or bromine, and
R⁴ is hydrogen, sulfo or carboxyl, or
Y is a group of the formula (5a) or (5b) 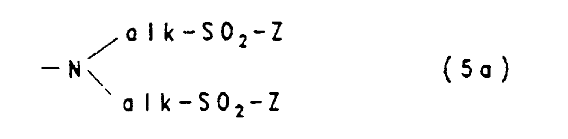 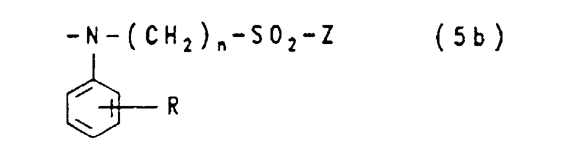 in which Z and alk are as defined above,
n is a number from 1 to 4, and
R is hydrogen or sulfo,
or
X is chlorine and
Y is a group of the formula (3), in which R° is a group of the formula (4a) or (4c) as defined above, or is a group of the formula (5b) or (5b) as defined above.

2. An anthraquinone compound as claimed in claim 1, wherein X is fluorine.

3. An anthraquinone compound as claimed in claim 1, wherein X is cyanoamino.

4. A compound as claimed in claim 1 or 2, wherein Y is a radical of the formula 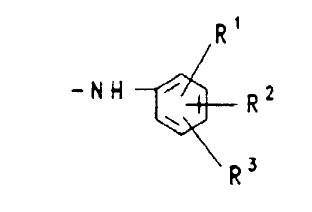 in which R¹ , R² and R³ are as defined in claim 1.

5. A compound as claimed in at least one of claims 1 to 4, wherein R¹ is as defined in claim 1, R² is hydrogen, alkyl of 1 to 4 carbon atoms, alkoxy of 1 to 4 carbon atoms or sulfo and R³ is hydrogen or alkoxy of 1 to 4 carbon atoms.

6. A compound as claimed in at least one of claims 1 to 5, wherein R² is hydrogen and R³ is hydrogen or methoxy.

7. An anthraquinone compound as claimed in at least one of claims 1 to 6, wherein Z is vinyl, β-sulfatoethyl or β-chloroethyl.

8. An anthraquinone compound as claimed in claim 1 of the formula 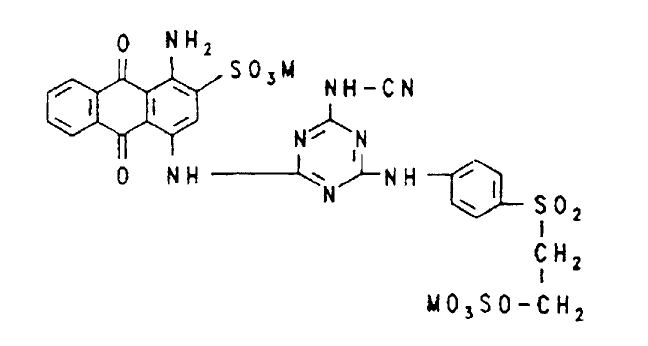 in which M is hydrogen or an alkali metal.

9. A process for the preparation of an anthraquinone compound of the formula (1) of claim 1, which comprises reacting with one another a compound of the formula (6) 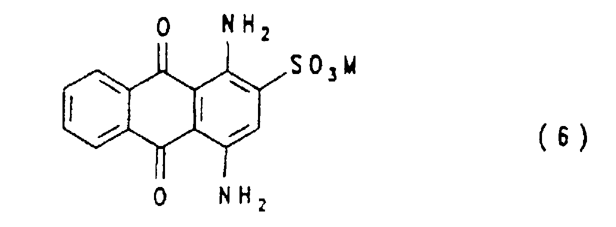 in which M is as defined in claim 1 and a compound of the formula (7) 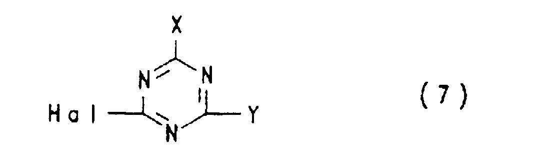 in which X and Y are as defined in claim 1 and Hal is chlorine or fluorine, or comprises reacting a compound of the formula (8) 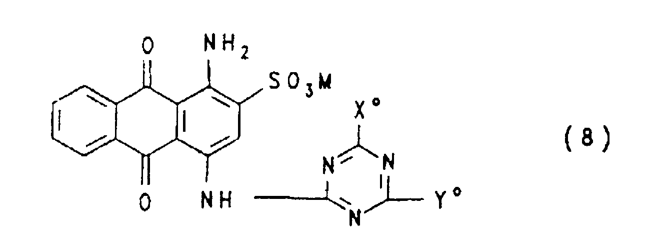 in which M is as defined in claim 1, X^{o} has one of the meanings of X and Y^{o} is fluorine or chlorine, if X^{o} is chlorine or fluorine with a compound of the formula HO-R^{A} or H₂N-R^{B} where R^{A} and R^{B} are as defined in claim 1, and if Y^{o} is chlorine or fluorine with a compound of the formula H₂N-R^{o} where R^{o} is as defined above, or with a compound of the formula HN(alk-SO₂-Z)₂ where alk and Z are as defined above, or with a compound of the formula (9) 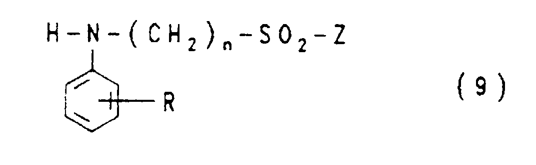 in which R, n and Z are as defined in claim 1.

10. A method of using an anthraquinone compound of claim 1 for dyeing (including printing) hydroxyl-and/or carboxamido-containing material, especially fiber material.

11. A process for dyeing (including printing) hydroxyl-and/or carboxamido-containing material, especially fiber material, in which a dye is applied to the material and the dye is fixed on the material by means of heat or by means of an alkali or by means of both measures, wherein the dye employed is an anthraquinone compound of claim 1.

## Revendications

1. Composé anthraquinonique correspondant à la formule générale (1) 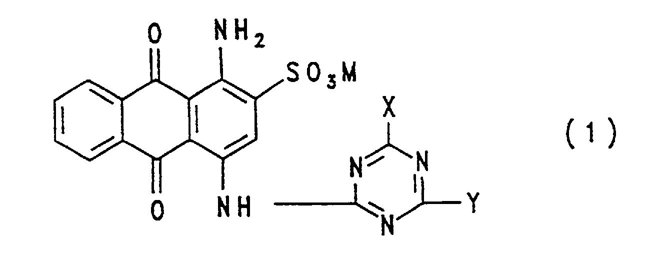 dans laquelle
M représente un hydrogène ou un métal alcalin,
X représente un fluor ou un groupement de formules générales (2a) ou (2b)
-O-R^{A} (2a)
-NH-R^{B} (2b)
dans lesquelles
R^{A} signifie un alkyle comprenant 1 à 10 atomes de carbone, un cycloalkyle comprenant 5 à 8 atomes de carbone, qui peut encore être substitué par 1 ou 2 groupements méthyle, ou un alkyle comprenant 2 à 8 atomes de carbone, qui est interrompu par un ou deux hétérogroupements, choisis parmi le groupe -O-, -NH-,-NH-CO-, -CO-NH-, -CO-, -SO₂-, -NH-SO₂- ou -SO₂-NH-, ou un benzyle ou un sulfoalkyle comprenant 1 à 4 atomes de carbone ou un phényle, substitué par 1 ou 2 groupements sulfo et/ou 1 groupement carboxy, et
R^{B} signifie un hydrogène, un alkyle comprenant 1 à 10 atomes de carbone, un cycloalkyle comprenant 5 à 8 atomes de carbone, qui peut encore être substitué par 1 ou 2 groupements méthyle, ou un alkyle comprenant 2 à 8 atomes de carbone, qui est interrompu par un ou deux hétérogroupements, choisis parmi le groupe -O-, -NH-,-NH-CO-, -CO-NH-, -CO-, -SO₂-, -NH-SO₂- ou -SO₂-NH-, ou un benzyle ou un sulfoalkyle comprenant 1 à 4 atomes de carbone ou un groupement cyano ;
Y représente un groupement de formule générale (3)
-NH-R^{o} (3)
dans laquelle
R^{o} représente un groupement de formules générales (4a), (4b) ou (4c)
-alk-SO₂-Z (4a) 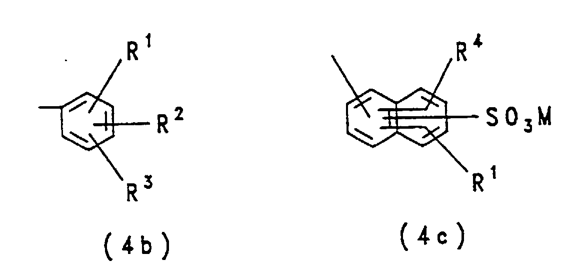
dans lesquelles
M a la signification susmentionnée,
Z représente un vinyle ou est un éthyle qui est substitué en position β par un substituant pouvant être éliminé par un alcali avec formation du groupement vinyle,
alk représente un alkylène comprenant 2 à 4 atomes de carbone,
R¹ représente un groupement de formule générale -SO2-Z, dans laquelle Z présente la signification susmentionnée,
R² représente un hydrogène, un alkyle comprenant 1 à 4 atomes de carbone, un alkoxy comprenant 1 à 4 atomes de carbone, un chlore, un brome, un sulfo ou un nitro,
R³ représente un hydrogène, un alkyle comprenant 1 à 4 atomes de carbone, un alkoxy comprenant 1 à 4 atomes de carbone, un chlore ou un brome, et
R⁴ représente un hydrogène, un sulfo ou un carboxy, ou
Y représente un groupement de formules générales (5a) ou (5b) 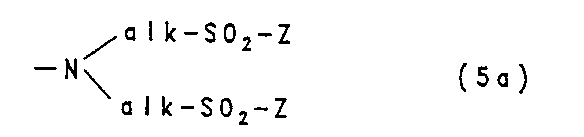 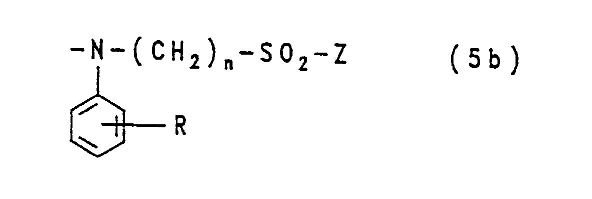
dans lesquelles
Z et alk présentent une des significations susmentionnées,
n représente le nombre 1 à 4 et
R représente un hydrogène ou un sulfo,
ou
X représente un chlore et
Y représente un groupement de formule (3) dans laquelle R^{o} signifie un groupement de formule (4a) ou (4c) ayant la définition ci-dessus, ou représente un groupement de formule (5a) ou (5b) ayant la définition ci-dessus.

2. Composé anthraquinonique selon la revendication 1, caractérisé en ce que X représente un fluor.

3. Composé anthraquinonique selon la revendication 1, caractérisé en ce que X représente un cyanoamino.

4. Composé selon la revendication 1 ou 3, caractérisé en ce que Y représente un radical de formule générale 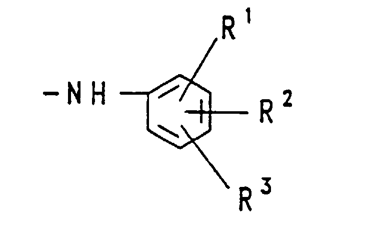 dans laquelle R¹, R² et R³ présentent les significations mentionnées dans la revendication 1.

5. Composé selon au moins l'une quelconque des revendications 1 à 4, caractérisé en ce que R¹ présente la signification mentionnée dans la revendication 1, R² représente un hydrogène, un alkyle comprenant 1 à 4 atomes de carbone, un alkoxy comprenant 1 à 4 atomes de carbone ou un sulfo et R³ représente un hydrogène ou un alkoxy comprenant 1 à 4 atomes de carbone.

6. Composé selon au moins l'une quelconque des revendications 1 à 5, caractérisé en ce que R² représente un hydrogène et R³ un hydrogène ou un méthoxy.

7. Composé anthraquinonique selon au moins l'une quelconque des revendications 1 à 6, caractérisé en ce que Z représente un vinyle, un β-sulfatoéthyle ou un β-chloroéthyle.

8. Composé anthraquinonique selon la revendication 1, de formule 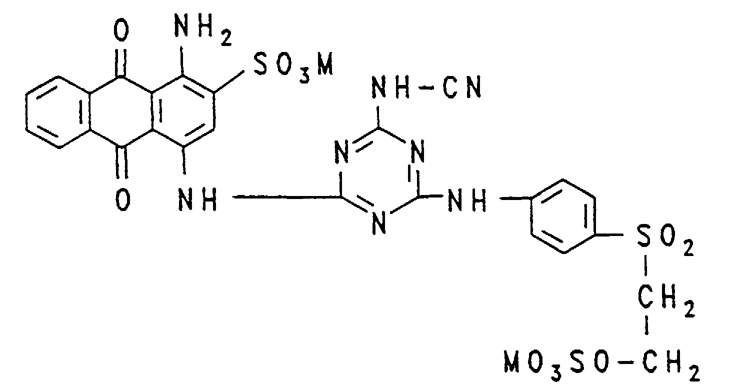 dans laquelle M représente un hydrogène ou un métal alcalin.

9. Procédé pour la préparation d'un composé anthraquinonique correspondant à la formule générale (1) de la revendication 1, caractérisé en ce qu'on transforme l'un avec l'autre, un composé de formule générale (6) 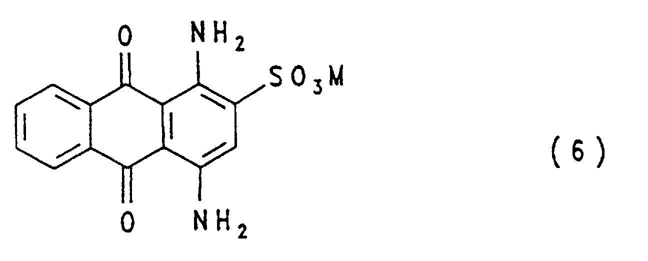 dans laquelle M présente la signification mentionnée dans la revendication 1, avec un composé de formule générale (7) 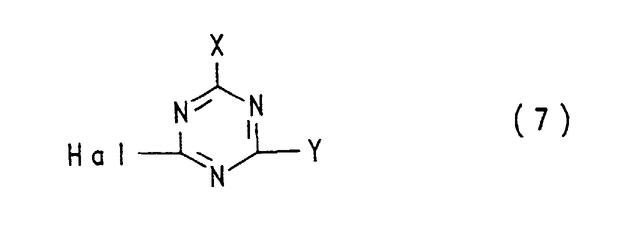 dans laquelle X et Y présentent une des significations mentionnées dans la revendication 1 et Hal représente un chlore ou un fluor, ou en ce qu'on transforme un composé de formule générale (8) 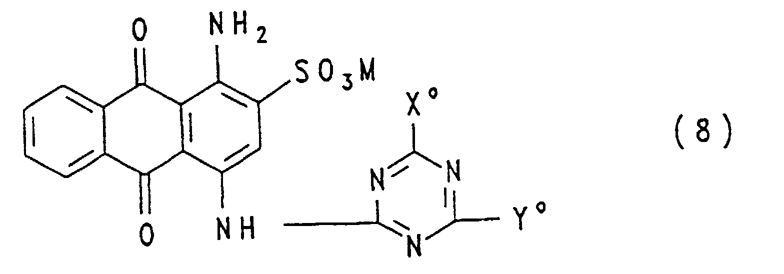 dans laquelle M présente la signification mentionnée dans la revendication 1, X^{o} présente une des significations de X et Y^{o} représente un fluor ou un chlore, dans le cas où X^{o} représenterait un chlore ou un fluor, avec un composé de formule générale HO-R^{A} ou H₂N-R^{B}, R^{A} et B^{B} ayant la signification mentionnée dans la revendication 1, et, dans le cas où Y^{o} représenterait un chlore ou un fluor, avec un composé de formule générale H₂N-R^{o}, R^{o} ayant la signification susmentionnée, ou avec un composé de formule générale HN (alk-SO₂-Z)₂, alk et Z présentant la signification susmentionnée, ou avec un composé de formule générale (9) 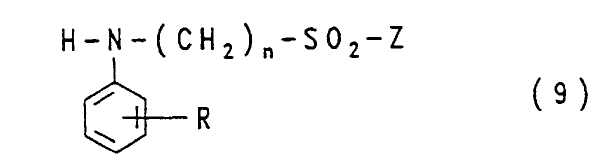 dans laquelle R, n et Z présentent les significations mentionnées dans la revendication 1.

10. Utilisation d'un composé anthraquinonique de la revendication 1 pour la teinture (y compris l'impression) d'un matériau contenant des groupements hydroxy et/ou carboxamide, en particulier un matériau fibreux.

11. Procédé pour la teinture (y compris l'impression) d'un matériau contenant des groupements hydroxy et/ou carboxamide, en particulier d'un matériau fibreux, dans lequel on applique un colorant sur le matériau et on fixe le colorant sur le matériau au moyen de chaleur ou au moyen d'un agent à effet alcalin ou à l'aide des deux méthodes, caractérisé en ce qu'on utilise comme colorant un composé anthraquinonique de la revendication 1.
